Europäisches Patentamt

European Patent Office

Office européen des brevets

(11) Numéro de publication: **0 187 561**
**A1**

# (12) DEMANDE DE BREVET EUROPEEN

(21) Numéro de dépôt: 85402295.1

(22) Date de dépôt: 25.11.85

(51) Int. Cl.⁴: **G02B 6/00** , G02B 1/00

(30) Priorité: 10.12.84 FR 8418831

(43) Date de publication de la demande:
16.07.86 Bulletin 86/29

(84) Etats contractants désignés:
DE GB SE

(71) Demandeur: COMMISSARIAT A L'ENERGIE
ATOMIQUE Etablissement de Caractère
Scientifique Technique et Industriel
31/33, rue de la Fédération
F-75015 Paris(FR)

(72) Inventeur: Aurouet, Claude
Rés. Le Boqueteau Les Peupliers Rue du Haras
F-91240 Saint Michel/Orge(FR)
Inventeur: Blumenfeld, Henry
33 rue la Fèverie
F-91190 Gif Sur Yvette(FR)
Inventeur: Bourdinaud, Michel
6 rue Modigliani
F-91440 Bures Sur Yvette(FR)
Inventeur: Calvet, Jean
15 rue Dussoubs
F-75002 Paris(FR)
Inventeur: Cavan, Jean-Claude
31 rue Leroyer
F-94300 Vincennes(FR)
Inventeur: Meyer, Joao
18, rue Ernest Cresson
F-75104 Paris(FR)
Inventeur: Thevenin, Jean-Claude
54 rue de Villacoublay
F-78140 Velizy-Villacoublay(FR)

(74) Mandataire: Mongrédien, André et al
c/o BREVATOME 25, rue de Ponthieu
F-75008 Paris(FR)

(54) Procédé d'exploitation d'un rayonnement lumineux à l'aide de fibres optiques fluorescentes, et dispositifs et appareils fonctionnels utilisant ce procédé.

(57) Le procédé exploite la particularité qu'ont les fibres optiques fluorescentes (14) de pouvoir être excitées latéralement par un rayonnement lumineux (11) en fournissant en leurs extrémités (20) des signaux lumineux concentrés.

L'invention propose l'application de ce procédé pour réaliser divers appareils de signalisation, de contrôle, de mesure des fonctions logiques, ou encore pour réaliser des capteurs solaires à génération directe d'électricité.

FIG.3

Procédé d'exploitation d'un rayonnement lumineux à l'aide de fibres optiques fluorescentes, et dispositifs et appareils fonctionnels utilisant ce procédé

La présente invention, qui a pour objet un procédé d'exploitation d'un rayonnement lumineux à l'air de fibres optiques fluorescentes et des dispositifs et appareils fonctionnels utilisant ce procédé, est relative de manière très générale à la technologie utilisant des fibres optiques.

Celle-ci est maintenant bien connue depuis plus d'une décennie. On utilise des fibres optiques, initialement fabriquées en verre, puis par la suite en différentes matières plastiques, pour conduire un signal lumineux, introduit par exemple à l'aide d'une optique de focalisation à travers une extrémité de la fibre, le long de cette fibre vers son autre extrémité terminale.

A cet effet, le coeur de la fibre, realisé en verre ou en matière plastique transparente, est enrobé dans une première gaine optique périphérique transparente d'indice de réfraction plus faible que celui de la matière utilisée pour réaliser le coeur de la fibre, afin que l'interface entre le coeur et cette gaine soit le siège de phénomènes de réflexions totales de la lumière permettant ainsi la transmission de celle-ci le long de la gaine sans perte notable.

Ces fibres optiques ainsi utilisées nécessitent donc la focalisation vers l'une de leurs extrémités du signal lumineux à transmettre ainsi qu'un positionnement géométrique très précis de ces extrémités par rapport à ces moyens optiques de focalisation, contraintes à respecter qui se justifient puisqu'il s'agit dans ce genre d'applications de transmettre des informations optiques par exemple en vue de leur traitement ultérieur à des fins de communication intelligible, ou encore d'affichage sur écrans de visualisation. Ceci n'est rapidement évoqué ici que pour mémoire car la présente invention se situe précisément dans un champ d'applications qui est totalement extérieur à celui de ces fibres optiques lumineuses à entrée terminale d'informations lumineuses numériques.

Par ailleurs, depuis quelques années, on a également fabriqué des fibres optiques dites "scintillantes", généralement en matières plastiques, dont le coeur est dopé à l'aide de produits appropriés, de telle sorte que la matière de la fibre, excitée par un flux de particules élémentaires, réémet de façon isotrope dans la matière un rayonnement de longueur d'onde $\lambda$ supérieure à $\lambda_1$. Une partie de ce rayonnement $\lambda_2$ est perdue, mais une partie non négligeable est capturée au sein de la fibre et se propage par réflexion interne jusqu'aux extrémités de la fibre "scintillante" où elle se collecte.

Ces fibres sont destinées à être utilisées en physique corpusculaire dans les appareils de détection de particules élémentaires et de mesure de paramètres liés à ces particules.

En particulier, on connaît un tel appareil très récent comportant des plaques scintillantes excitées par un rayonnement corpusculaire perpendiculaire à ces plaques. Ces plaques délivrent sur leurs bords latéraux les signaux lumineux collectés. Ces bords latéraux sont accolés à des fibres scintillantes latérales qui délivrent à leur tour de nouveaux signaux lumineux en leurs extrémités.

La présente invention présente quelque analogie avec ce type très particulier d'utilisation de fibres optiques scintillantes, puisqu'elle part du constat qu'il est possible d'exciter latéralement une fibre optique dopée, évidemment dépourvue de gaine de protection mécanique, par un rayonnement non seulement de particules physiques élémentaires comme dans le cas de l'appareil précité, mais plus généralement par un rayonnement lumineux diffus. Elle en diffère donc essentiellement par ce type de rayonnement lumineux exploité et, en conséquence comme on le verra ci-après, par les applications recherchées et les mises en oeuvre conséquentes proposées.

Parmi les fibres utilisables comme fibres "scintillantes", c'est-à-dire excitables par un rayonnement corpusculaire, on connaît les fibres dites "fluorescentes", dont on décrira quelques types ci-après, qui sont sensibles à des rayonnements lumineux et plus spécifiquement aussi à des rayonnements corpusculaires et qui, jusqu'à présent, n'ont été utilisées que dans des appareils du genre précité de détection et mesure de quantités de particules physiques.

L'invention met en oeuvre de telles fibres fluorescentes excitées latéralement, mais en interaction avec des rayonnements lumineux, et ce de diverses manières nouvelles.

L'invention a donc pour objet général un procédé d'exploitation d'au moins un rayonnement lumineux dans au moins un espace utile traversé par ce rayonnement au moyen d'au moins une fibre optique fluorescente à coeur et gaine transparentes, caractérisé en ce que l'on dispose en un endroit quelconque de cet espace utile une partie d'une telle fibre fluorescente dans une position telle qu'elle soit susceptible d'être excitée latéralement par ce rayonnement et que l'on munit au moins l'une des deux extrémités de la fibre, où apparaît un signal lumineux correspondant à une excitation latérale de la fibre, de moyens fonctionnels d'exploitation de ce signal.

Selon une application, le procédé se caractérise en ce que la partie de fibre excitable latéralement est susceptible d'être soumise au flux d'une seule source ponctuelle et que l'extrémité de la fibre assure une fonction binaire de signalisation de l'état de fonctionnement ou de non fonctionnement de cette source.

Selon une autre application, le procédé se caractérise en ce que la partie de fibre excitable latéralement est susceptible d'être soumise au flux d'une pluralité de sources ponctuelles et que l'extrémité de fibre assure une fonction logique optique OU, de signalisation de l'état de non fonctionnement de ces sources ou de fonctionnement de l'une au moins d'entre elles.

Selon une autre application, le procédé se caractérise en ce que la partie de fibre excitable latéralement est enroulée à spires proches, par exemple, tout autour et à proximité d'une source lumineuse matérielle, cette partie de fibre assurant ainsi une fonction de collection du flux lumineux émis par cette source, et que les extrémités de fibre assurent une fonction de concentration ponctuelle de lumière et d'émission ponctuelle de cette lumière concentrée.

Selon une autre application, le procédé se caractérise en ce que l'on dispose en un endroit quelconque de l'espace utile traversé par un rayonnement lumineux un panneau formé par l'accolement dans une surface cylindrique de plusieurs fibres optiques fluorescentes dont les extrémités sont situées côte à côte le long des bords extrêmes du panneau, la face du panneau assurant ainsi une fonction de collection du flux lumineux et les bords extrêmes du panneau assurant ainsi une fonction de concentration en ligne de lumière et d'émission en ligne de cette lumière concentrée.

Selon une particularité de cette application, le procédé se caractérise en ce que l'on collecte, cette émission en ligne de lumière concentrée à l'aide d'une autre partie de fibre optique fluorescente excitable latéralement par cette ligne d'émission de lumière concentrée, les extrémités de cette dernière fibre assurant ainsi une fonction de deuxième concentration du flux initial.

Selon une autre particularité de cette même application, le procédé se caractérise en ce que l'on exploite un rayonnement lumineux parallèle, tel que le rayonnement solaire, que l'on dispose alors, sur une surface touchée par ce rayonnement, une pluralité de panneaux du type précité, que l'on collecte l'énergie lumineuse concentrée aux bords de ces panneaux par un jeu de fibres optiques fluorescentes et l'on excite par les extrémités des fibres de ce jeu une troisième fibre optique fluorescente assurant ainsi une fonction de troisième concentration du rayonnement initial et que l'on associe les extrémités de cette troisième fibre à des moyens de conversion directe de lumière en électricité.

Selon une autre application, on dispose une source de lumière linéaire et, en regard de cette source et parallèlement à elle, une fibre optique fluorescente, et l'on équipe les extrémités de cette fibre de détecteurs de lumière, des moyens de traitement de l'information connus en soi étant prévus pour traiter les informations délivrées par ces détecteurs et fournir ainsi des indications sur les variations de lumière excitant latéralement la fibre, ces variations étant provoquées soit par des défauts résultant de manques de matière dans une bande de matériau à contrôler défilant entre la source linéaire et la fibre, soit par l'apparition d'objets opaques dans l'espace normalement libre entre la source linéaire et la fibre.

Selon une autre application, on exploite une source de lumière polychromatique et l'on soumet au rayonnement de cette source une pluralité de fibres optiques fluorescentes dont chacune absorbe en raison de son dopage particulier une longueur d'onde correspondante bien définie, de sorte que l'excitation ou la non excitation de chacune de ces fibres permet d'assurer une fonction d'analyse spectrale du rayonnement.

On comprend, à la lumière de ce qui précède, la très grande variété d'applications possibles du procédé général objet de l'invention.

L'invention a également évidemment pour objets les nombreux et divers dispositifs élémentaires permettant la mise en oeuvre pratique de l'invention.

L'invention a donc pour objet un dispositif élémentaire caractérisé en ce qu'il comprend une fibre optique fluorescente, des moyens de support d'une partie de cette fibre destinés à placer cette partie dans un espace utile traversé par au moins un rayonnement lumineux à exploiter, et des moyens associés à au moins une extrémité de la fibre pour assurer une fonction d'exploitation de ce rayonnement.

L'invention a pour autre objet un dispositif élémentaire caractérisé en ce qu'il comprend un enroulement à spires proches d'une fibre optique fluorescente destiné à former une surface cylindrique destinée à entourer la source de rayonnement lumineux.

L'invention a pour autre objet un dispositif élémentaire caractérisé en ce qu'il comprend plusieurs fibres optiques fluorescentes accolées latéralement les unes aux autres pour former un panneau destiné à être exposé au rayonnement lumineux et dont les bords extrêmes constituent des sorties en ligne de lumière concentrée.

L'invention a pour autre objet un dispositif élémentaire formé par l'association d'un tel panneau avec une fibre optique fluorescente transversale collectant les sorties en ligne de lumière concentrée du panneau.

L'invention a encore pour objets des dispositifs réalisés par le montage en parallèle des dispositifs élémentaires ci-dessus.

L'invention a encore pour objets des dispositifs réalisés par le montage en série des dispositifs élémentaires ci-dessus.

L'invention a enfin également pour objets les appareils construits à l'aide des dispositifs ci-dessus pour la mise en oeuvre du procédé général de l'invention et de ses diverses applications, notamment de celles évoquées ci-dessus.

Notamment, l'invention a pour objet un appareil de signalisation de l'état de fonctionnement ou de non fonctionnement d'au moins une source de rayonnement caractérisé en ce que les moyens associés à l'extrémité de la fibre sont des moyens de signalisation montés sur un tableau de bord.

L'invention a pour autre objet une source de lumière ponctuelle très lumineuse caractérisée en ce qu'elle est constituée des extrémités d'une fibre enroulée à spires proches autour d'une source lumineuse.

L'invention a pour autre objet un appareil transformant directement l'énergie solaire en électricité caractérisé en ce qu'il comporte en cascade des panneaux de fibres optiques fluorescentes accolées et des fibres de collection de l'énergie concentrée délivrée sur les bords de ces panneaux, les extrémités de sortie de la fibre finale étant associées à des piles photovoltaïques.

L'invention a pour autre objet un appareil de contrôle caractérisé en ce qu'il comporte une source lumineuse linéaire, une fibre optique fluorescente disposée en regard et parallèlement à cette source, et des photodétecteurs associés aux extrémités de cette fibre, des moyens de traitement de l'information connus en soi étant associés à ces photodétecteurs pour interpréter les variations de lumière reçue par la fibre.

L'invention a pour autre objet un appareil d'analyse spectrale d'un rayonnement polychromatique caractérisé en ce qu'il comporte une pluralité de fibres optiques fluorescentes dopées de manières différentes et absorbant en conséquence des rayonnements de longueurs d'onde différentes, des moyens de traitement de l'information connus en soi étant associés aux signaux de sortie des différentes fibres pour effectuer cette analyse spectrale.

La description suivante fera mieux comprendre les principes constitutifs de l'invention et ses diverses applications, procédés, dispositifs et appareils.

On se reportera au dessin annexé, sur lequel :

- la figure 1 est un schéma simple rappelant l'utilisation classique de fibres optiques connues,

- la figure 2 est un schéma simple rappelant l'utilisation récente de fibres scintillantes dans un appareil de détection et mesure de particules élémentaires,

- la figure 3 est un schéma simple montrant l'application nouvelle selon l'invention d'une fibre fluorescente à la détection d'un rayonnement lumineux,

- la figure 4 représente un appareil de signalisation selon l'invention pour contrôler le fonctionnement ou le non fonctionnement d'une pluralité de sources lumineuses,

- les figures 5 et 6 montrent l'application de l'invention à la réalisation de sources ponctuelles de lumière très intense,

- la figure 7 illustre un art antérieur d'exploitation du rayonnement solaire,

- la figure 8 montre le perfectionnement de cet art selon l'invention,

- la figure 9 montre la réalisation de dispositifs à fibres selon l'invention sous forme de panneaux avec collection de la lumière concentrée aux bords de ces panneaux par d'autres fibres optiques fluorescentes,

- la figure 10 représente un appareil capteur solaire pour fourniture directe d'électricité, et,

- la figure 11 représente un appareil de contrôle exploitant les variations de lumière reçue par une fibre optique fluorescente utilisée selon l'invention.

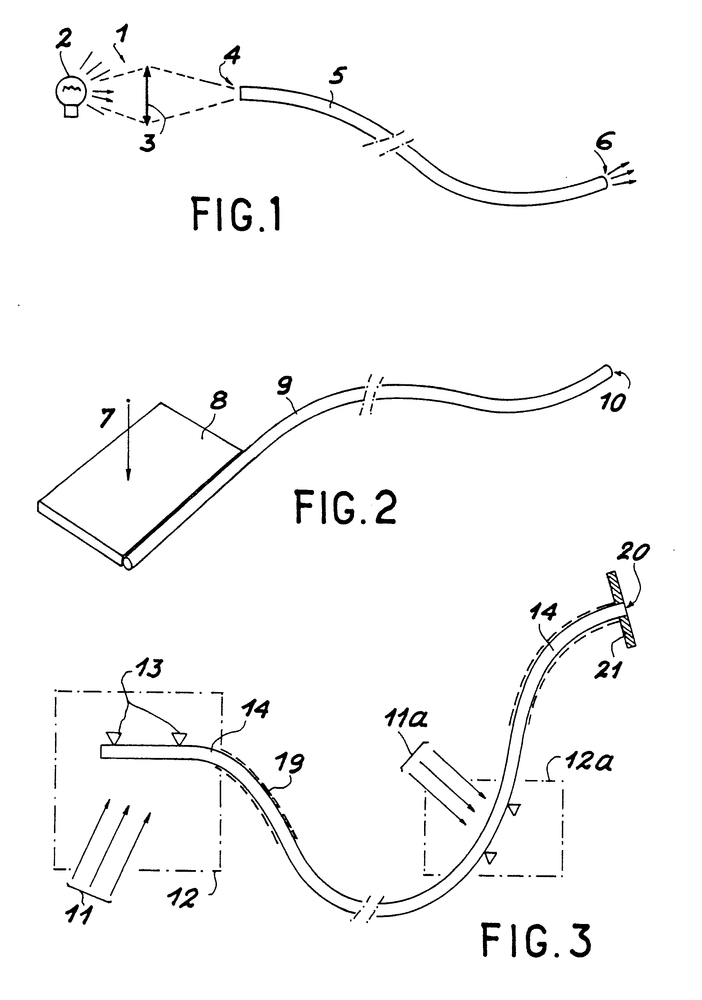

La figure 1 illustre très schématiquement la façon habituelle d'utiliser des fibres optiques qui consiste à injecter le flux lumineux 1 d'une source 2, au moyen d'une optique de focalisation 3 par exemple, au travers de la face d'entrée 4 d'une fibre optique 5. Après transport, l'énergie lumineuse est disponible sur la face de sortie 6 de la fibre. La conformation du signal lumineux d'entrée exige donc la mise en oeuvre de moyens optiques 3 précis et le positionnement précis de ces moyens par rapport à la face d'entrée 4 de la fibre optique.

L'invention, qui vise également à traiter des rayonnements lumineux, mais pour d'autres applications, a pour but de se libérer de ces contraintes.

A cet effet, elle s'inspire d'une autre application de fibres, dite "scintillantes", illustrée très schématiquement sur la figure 2 concernant la détection de particules élémentaires. Cette figure représente la seule partie d'un appareil de physique connu qui concerne par analogie la présente invention. Dans ce cas, l'impact d'une particule élémentaire, schématisé par la flèche 7, sur une plaque scintillante 8 engendre, par scintillation au sein de la matière de la plaque 8, une émission lumineuse qui reste captée à l'intérieur de la plaque et parvient, à la suite de réflexions totales successives, sur les bords latéraux de la plaque où elle délivre un signal lumineux. Un bord de la plaque 8 est accolé sur toute sa longueur à une fibre optique scintillante 9 qui, à son tour, est excitée par ce signal et cette excitation provoque la délivrance d'un second signal Lumineux à une extrémité 10 de la fibre 9.

On collecte ainsi tous les signaux lumineux correspondant au passage d'une particule élémentaire dans la masse de l'appareil.

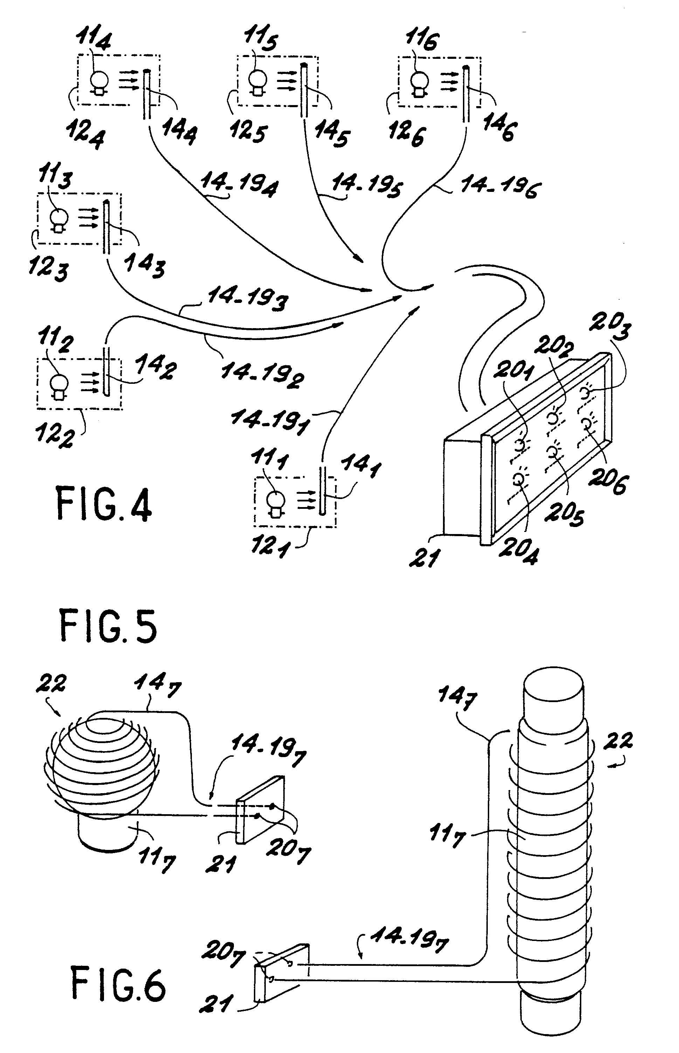

La figure 3 illustre très schématiquement le procédé de l'invention. Il concerne l'exploitation d'un rayonnement lumineux, comme dans la figure 1, schématisé par les flèches 11. Ce rayonnement 11 est supposé, lorsqu'il existe, avoir une action à l'intérieur d'un espace utile 12. Le procédé de l'invention consiste à disposer en un endroit quelconque 13 de cet espace utile 12 une fibre optique fluorescente 14, cet endroit quelconque 13 étant ici schématisé par des moyens de support de cette fibre 14, et la fibre 14 étant positionnée en cet endroit quelconque 13 de telle sorte qu'elle puisse être excitée latéralement par le rayonnement lumineux 11, de façon analogue au mode d'excitation latérale de la fibre scintillante de la figure 2.

Pour la plupart des applications, la fibre optique fluorescente 14, entourée, en dehors de l'espace utile 12, d'une gaine de protection mécanique opaque 19, transmettra à distance le signal lumineux engendré par l'excitation due au rayonnement lumineux vers l'une de ses extrémités 20 équipée, selon l'invention, de moyens d'exploitation de ce signal schématisés par le bloc fonctionnel hachuré 21.

On a représenté en 12a un second espace utile dans lequel agit un second rayonnement 11a. Dans ce cas, la fibre optique joue le rôle d'un circuit logique OU vis-à-vis du fonctionnement des deux sources 11 et 11a. Ce mode d'injection de la lumière dans une fibre optique fluorescente est fondamentalement différent des modes précédents des figures 1 et 2 et offre les avantages suivants :

- pas de précision de positionnement du flux lumineux à injecter : le simple fait de placer une fibre fluorescente à proximité d'une source lumineuse permet une excitation intense,

- l'excitation est possible en tout point du parcours de la fibre ; on peut donc, si on le souhaite, additionner les excitations de plusieurs sources ou intégrer sur une grande longueur l'excitation d'un flux étendu,

- on peut détecter la présence d'un flux à la seule condition qu'il intercepte la fibre fluorescente en un point quelconque.

En résumé, on peut dire qu'une fibre fluorescente utilisée selon l'invention n'est pas autre chose qu'un bus optique (par analogie avec un bus électrique) caractérisé par ses deux fonctions essentielles :

- collection de signaux optiques en provenance d'un grand nombre de sources, sans précautions particulières d'injection de l'énergie lumineuse, et

- réalisation de l'addition de ces signaux optiques.

Il est opportun de préciser ici les principes et caractéristiques du phénomène physique de la fluorescence.

La fluorescence est le phénomène par lequel la matière excitée par un rayonnement lumineux de longueur d'onde $\lambda_1$, réémet de façon isotrope un rayonnement de longueur d'onde $\lambda_2$ supérieure à $\lambda_1$. Les bandes d'absorption et de réémission sont caractéristiques du matériau utilisé, ainsi que le rendement de fluorescence. La matière sous toutes ses formes peut être le siège de fluorescence, qu'elle soit gazeuse (gaz nobles comme Kr, A ou Ne), liquide (hydrocarbures, composés aromatiques,...) ou solide (cristalline comme certains verres au Cérium).

La présente invention concerne plus particulièrement la fluorescence de matériaux plastiques transparents dopés par des produits fluorescents à haut rendement formant ainsi des solutions solides.

Les fibres optiques quant à elles, aujourd'hui objet de larges développements, sont constituées par une partie centrale transparente d'indice de réfraction élevé recouverte d'une couche mince également transparente d'indice plus faible. Sa fonction est de protéger des diverses agressions extérieures la surface du coeur sur laquelle vont se produire les réflexions internes de la lumière.

On peut ainsi obtenir une transmission de messages optiques sur des distances de plusieurs centaines de mètres sans atténuation notable.

Les fibres optiques les plus performantes sont en verre ou en silice, mais les fibres plastiques sont également en pleine expansion du fait de la simplicité de leur fabrication et de leur faible coût.

Les fibres plastiques présentent en outre le grand intérêt d'être aisément dopées avec des matériaux scintillants ou fluorescents comme cela a été évoqué plus haut. Cela est également possible, bien que moins facile, pour des fibres en verre ou silice, qui sont donc utilisables pour toutes les applications décrites plus loin.

Le principe de fonctionnement d'un collecteur de lumière à fibres optiques fluorescentes est le suivant :

La fibre est soumise sur sa surface extérieure à un rayonnement $E_1$ de longueur d'onde moyenne $\lambda_1$. Si l'agent fluorescent avec lequel elle a été dopée a une bande d'absorption adaptée et centrée sur $\lambda_1$, le coeur de la fibre est excité et réémet de la lumière à la longueur d'onde $\lambda_2$, de façon isotrope.

Une partie est perdue et ressort de la fibre, mais une partie non négligeable est capturée au sein de la fibre, et se propage par réflexion interne jusqu'à l'extrémité où on dispose donc d'un flux lumineux à la longueur d'onde $\lambda_2$.

Le processus est intégralement calculable.

Soit :

- D la longueur de la fibre,

- a le diamètre de la fibre,

- $L_{ab}$ la longueur d'absorption du coeur (à $\lambda_1$),

- $L_{att}$ la longueur d'atténuation du coeur (à $\lambda_2$),

- n l'indice de réfraction du coeur,

- n-$\Delta$n l'indice de réfraction de la gaine,

- $q_e$ l'efficacité quantique de fluorescence.

On peut alors aisément montrer que, pour une fibre de longueur D soumise à l'éclairement $E_1$ (à $\lambda_1$), le flux disponible aux deux extrémités (à $\lambda_2$) s'exprime par :

$$\emptyset = \underbrace{a L_{att} E_1}_{\alpha_1} \cdot \underbrace{(1-e^{-\frac{a}{L_{ab}}})}_{\alpha_2} \cdot \underbrace{q_e}_{\alpha_3} \cdot \underbrace{\frac{\Delta n}{n}}_{\alpha_4} \cdot \underbrace{(1-e^{-\frac{D}{L_{att}}})}_{\alpha_5}$$

Dans cette formule ;

- $\alpha_1$ représente la totalité du flux collecté,

- $\alpha_2$ est le taux d'absorption du flux incident,

- $\alpha_3$ est l'efficacité de la réémission par fluorescence,

- $\alpha_4$ est l'efficacité de capture de la lumière de fluorescence,

- $\alpha_5$ est un facteur intégrant les pertes par transmission dans la fibre.

Si on considère maintenant la densité d'énergie disponible à l'extrémité de surfaces de la fibre, et qu'on la compare à la densité d'énergie incidente $E_1$, on peut définir un facteur de concentration K tel que :

$$K = \frac{\emptyset}{S E_1} = \frac{4\emptyset}{\pi a^2 E_1} = \frac{4}{\pi} \cdot \frac{L_{att}}{a} \cdot (1-e^{-\frac{a}{L_{ab}}}) \cdot q_e \cdot \frac{\Delta n}{n} \cdot (1-e^{-\frac{D}{L_{att}}})$$

Les valeurs typiques des différents paramètres pour des fibres connues produites par la demanderesse sont :

$$- L_{att} = 1000 \text{ mm} \qquad a = 1 \text{ mm}$$

$$- 1-e^{-\frac{a}{L_{ab}}} = .8 \qquad q_e = .8$$

$$- 1-e^{-\frac{L}{L_{att}}} = .86 \qquad \frac{\Delta n}{n} = 8,5 \%$$

(pour D = 2L$_{att}$ = 2 m) qui conduisent à : K~ 60

En résumé, une fibre de 2 m de long, de diamètre 1 mm telle que celles produites par le demandeur, concentrerait le flux qu'elle absorbe autour de la longueur d'onde λ₁ par un facteur 60 à chacune de ses extrémités, moyennant un décalage spectral λ₁→λ₂.

On remarque que le facteur dominant l'amplification est le rapport

$$\frac{Latt}{a}$$

d'où l'intérêt de fibres de petit diamètre (à condition de conserver les propriétés de transparence, ainsi qu'une absorption satisfaisante du flux incident), et que des structures en cascade, où l'on bénéficie à chaque étage de la concentration, sont concevables comme on l'illustrera ci-après.

Une première application, la plus simple, du procédé de l'invention est illustrée schématiquement sur la figure 4. Elle concerne le contrôle à partir d'un tableau de bord unique de l'état de fonctionnement de différentes sources lumineuses situées en des emplacements distincts. Il peut s'agir du contrôle de l'éclairement de pièces d'un ensemble de pièces, ou encore du contrôle du bon fonctionnement de sources lumineuses équipant une automobile.

Cette première application de l'invention ne met donc en oeuvre qu'une fonction de détection d'un rayonnement lumineux, éventuellement de détection en parallèle de plusieurs rayonnements lumineux distincts.

Dans ce cas, on équipera les six espaces utiles 12.1, 12.2,... 12.6 soumis éventuellement au rayonnement lumineux de différentes lampes 11.1, 11.2,... 11.6 (plafonnier, phares, codes, veilleuses, feux arrière, feux d'arrêt) de fibres optiques fluorescentes 14.1, 14.2,...14.6 excitables latéralement. Ces fibres 14-19.1, 14-19.2,... 14-19.6 seront réunies par leurs extrémités 20.1, 20.2,... 20.6 au tableau de bord où l'on obtiendra ainsi une signalisation synoptique du fonctionnement ou du non fonctionnement de ces différentes lampes.

Pour augmenter la luminosité de la face extrême de signalisation de la fibre optique fluorescente, on applique à l'autre extrémité inutilisée de la fibre un revêtement jouant le rôle de miroir.

Une seconde application du procédé de l'invention vise à disposer d'une source lumineuse ponctuelle très brillante à partir d'une source ponctuelle peu brillante placée à distance.

Cette application est schématiquement représentée sur la figure 5. Dans ce cas, on exploite le rayonnement lumineux émis par une lampe classique à incandescence 11.7 peu brillante. Selon l'invention, cette lampe 11.7 est complètement entourée par un enroulement 22 d'une fibre optique fluorescente 14.7 à spires proches. Pour simplifier le schéma de la figure 5, la fibre 14.7 autour de la lampe 11.7 est figurée à l'aide d'un simple trait de dessin. Les deux brins réunis 14-19.7 de cette fibre vont à distance s'enficher dans un support schématisé en 21 qui, ainsi alimenté, constitue une source lumineuse ponctuelle très brillante par les extrémités de sortie 20.7 de cette fibre.

Cette seconde application de l'invention met en oeuvre une fonction de collection et concentration du maximum de lumière émise par une source lumineuse à flux non parallèle.

La figure 6 illustre la même application, mais utilisant le rayonnement lumineux émis par un tube fluorescent. Les mêmes numéros de référence repèrent sur les figures 5 et 6 les éléments identiques ou analogues.

Cette fonction de collection permet un rendement relativement élevé, pouvant approcher 20% de collection, du rayonnement lumineux émis par la source lumineuse de départ, et ceci sans centrage ni positionnement précis de l'enroulement 22 par rapport à la source 11.7.

Une troisième application de l'invention concerne la collection et la concentration de rayonnement lumineux à l'aide de dispositifs utilisant le procédé de l'invention, mais présente un montage en parallèle de fibres optiques fluorescentes pour constituer des panneaux.

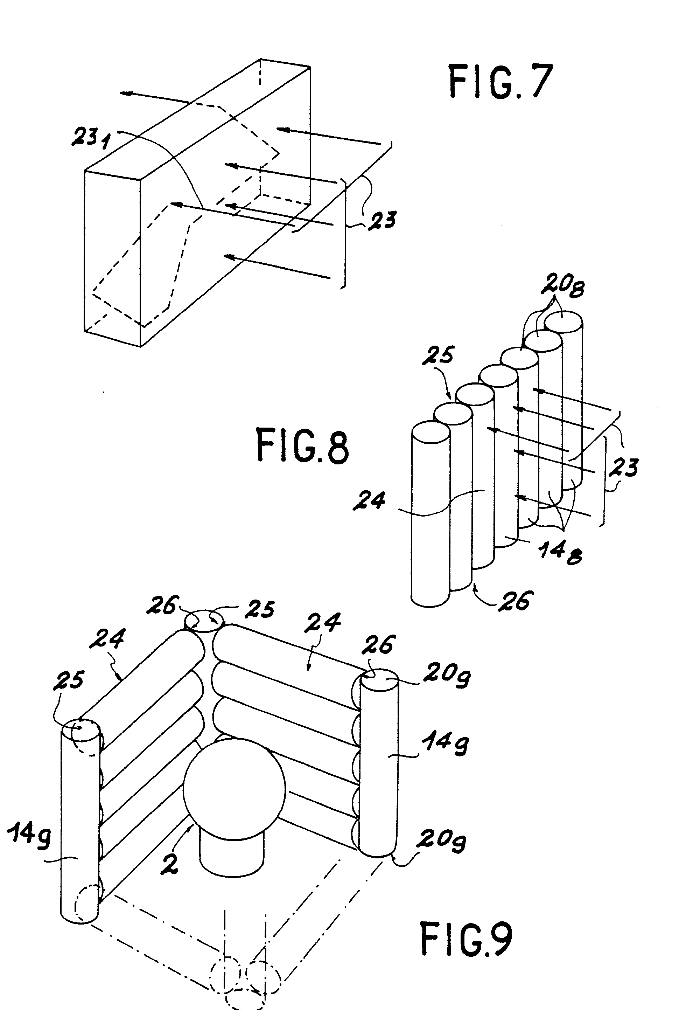

La figure 7 illustre schématiquement l'état de l'art antérieur le plus proche de cette application.

Cette figure illustre le procédé connu consistant à exposer une plaque épaisse d'un matériau transparent (verre minéral ou organique), dopé à l'aide d'un produit fluorescent approprié, au rayonnement solaire schématisé par les deux jeux de flèches orthogonales 23. Une partie du flux est absorbée puis réémise de façon isotrope par fluorescence.

Une fraction de l'énergie lumineuse réémise est confinée à l'intérieur de la plaque, et elle se propage par réflexions internes jusque sur les tranches où elle est disponible pour ces capteurs du genre piles photovoltaïques par exemple, comme représenté par le trajet du rayon 23.

L'intérêt théorique du dispositif réside dans l'absence de système d'orientation vers le soleil ainsi que la possibilité de fonctionnement en éclairage diffus (ciel nuageux). Il y a de plus concentration de l'énergie collectée par des grandes faces du capteur sur les tranches de petite surface.

Cette possibilité de collecter et de concentrer l'énergie solaire au moyen de plaques fluorescentes est connue depuis une quinzaine d'années. Plusieurs publications scientifiques mentionnent cette idée. Toutefois, la réalisation pratique s'est heurtée à deux problèmes majeurs, l'un est la stabilité des produits fluorescents utilisés et notamment leur détérioration sous l'effet du rayonnement incident ; le second est l'efficacité du transfert de l'énergie lumineuse réémise par fluorescence jusqu'aux tranches de la plaque. S'il est vrai que l'emploi de fibres optiques ne résout en rien le premier (des progrès significatifs ont été cependant obtenus récemment en matière de stabilité des colorants), il en va autrement pour le second si l'on applique le procédé de l'invention.

Cette nouvelle application est illustrée schématiquement sur la figure 8. Dans ce cas, un rayonnement lumineux parallèle, tel que le rayonnement solaire, schématisé par les deux jeux de flèches orthogonales 23, frappe latéralement un jeu de six fibres optiques fluorescentes 14.8 accolées les unes aux autres par des génératrices contenues dans un même plan. La lumière entrant latéralement dans ces fibres est canalisée vers les extrémités 20.8 des fibres accolées et les réflexions à l'intérieur de la matière sont moins nombreuses que dans le cas de la figure 7, et avec un coefficient proche de 100%.

On dispose ainsi, selon le schéma de la figure 8, d'un panneau élémentaire 24 de fibres optiques fluorescentes accolées permettant de délivrer sur ses bords supérieur 25 et inférieur 26 des signaux lumineux concentrés résultant de la collecte et de la concentration des flux lumineux incidents 23.

De tels panneaux permettent le montage en cascade de deux étages de collection et concentration de flux lumineux, comme le montre maintenant la figure 9 relative à une autre application encore du procédé de l'invention.

Sur cette figure 9, on a représenté en perspective une lampe à incandescence 2 enfermée dans une boîte constituée par quatre panneaux 24 de fibres optiques fluorescentes du type représenté sur la figure 8, dont deux seulement ont été dessinés. Les panneaux 24 collectent et concentrent sur leurs bords 25 et 26 le flux émis par la lampe 2. Des fibres optiques fluorescentes verticales 14.9 sont disposées aux quatre arêtes de jonction des quatre panneaux 24 et collectent à leur tour, en un second étage, les signaux lumineux disponibles sur les bords 25 et 26 et les concentrent en leurs extrémités 20.9.

Si, comme c'est le cas le plus fréquent, la source 2 est polychromatique, la boîte ainsi constituée laissera passer la fraction du spectre émis par la lampe et qui n'est pas absorbée par les fibres optiques fluorescentes des panneaux 24. Cet appareil de la figure 9 constitue donc un luminaire apparemment classique, mais fournissant de surcroît une forte concentration de la lumière absorbée par les fibres des panneaux de la boîte sur quatre voies annexes constituées des quatre fibres optiques verticales 14.9.

Une autre application encore de l'invention concerne la collection et concentration plusieurs étages de flux lumineux parallèles tels que le rayonnement solaire.

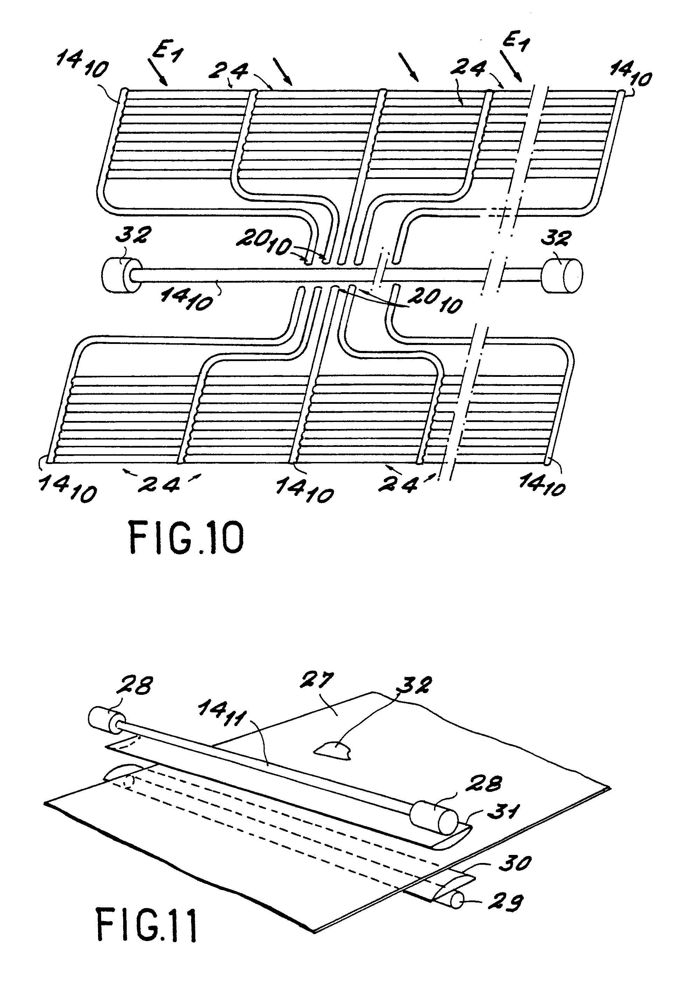

La figure 10 illustre schématiquement en perspective cette autre application.

Le flux solaire incident $E_i$ tombe sur l'appareil plan, posé au sol, de la figure 10. Cet appareil comprend des panneaux 24 constitués de fibres optiques fluorescentes accolées, tels que celui de la figure 8, et les extrémités de ces panneaux excitent des fibres 14.10 disposées en regard de ces extrémités et dont les extrémités 20.10 sont réunies en lignes pour être en regard d'une fibre terminale 14.10.1 assurant un troisième étage de collection-concentration, analogue à celui représenté sur la figure 9.

L'appareil peut comporter, symétriquement par rapport à cette fibre terminale 14.10.1, un autre jeu de panneaux et fibres identiques à celui décrit ci-dessus.

Les extrémités de sortie de la fibre terminale 14.10.1 peuvent être connectées à des convertisseurs tels que des piles photovoltaïques 32 pour obtenir directement de l'électricité.

Un appareil tel que celui représenté par la figure 10 peut être installé sur le toit des habitations.

Une autre application encore de l'invention concerne un appareil de détection de trous dans des bandes larges en défilement devant une ligne transversale de contrôle de la bande.

Selon l'art antérieur, on dispose selon cette ligne une ou plusieurs sources de lumière occultée par la bande. On dispose, de l'autre côté de ces sources de lumière par rapport à la bande, une rangée de détecteurs de lumière tels que des photodiodes, dont le champ ne s'étend toutefois que sur quelques millimètres.

Cet art antérieur est difficilement approprié au contrôle de grandes largeurs de bandes, car il implique un nombre très élevé de photodiodes.

Selon l'invention, on propose de substituer à ces appareils de contrôle antérieurement connus un appareil beaucoup plus simple dont le schéma est donné à la figure 11.

Cet appareil comprend transversalement à la bande 27 à contrôler, une fibre optique fluorescente 14.11 dont les deux extrémités sont connectées à deux photodiodes 28. De l'autre côté de cette fibre 14.11 par rapport à la bande 27 est disposée une source linéaire de lumière telle qu'un tube fluorescent 29. Eventuellement, des optiques simples 30 et 31 focalisent et concentrent respectivement les flux lumineux émis par le tube 29 et reçu par la fibre 14.11.

Lorsqu'un défaut, c'est-à-dire un trou, est détecté par passage de la lumière du tube 29 vers la fibre 14.11 lorsque ce trou est positionné entre la lampe 29 et la fibre optique fluorescente 14.11, les signaux reçus par les diodes 28 peuvent être traités pour définir la localisation et l'importance de ces défauts.

Enfin, il y a lieu de mentionner qu'une fibre optique fluorescente a des spectres d'absorption et de réémission bien déterminés. En conséquence, selon l'invention, la mise en oeuvre du procédé décrit ci-dessus, pour certaines applications, assure en outre une fonction de sélection de spectre comme cela a été mentionné pour le luminaire illustré sur la figure 9.

Bien que l'on puisse utiliser pour la mise en oeuvre de l'invention n'importe quel type de fibre optique fluorescente réalisée en verre, en silice, ou en différentes matières plastiques, mélangé avec des produits fluorescents appropriés, on utilisera de préférence des fibres en matières plastiques.

Par exemple, on utilisera des fibres dont le coeur est du polystyrène ou du polyméthacrylate de méthyle, ce dernier étant connu sous l'abréviation de PMMA.

Selon un premier type de fibres, cette base sera mélangée à 100 mg/l avec du bis-MSB dont la formule est :

p-bis(0-méthylstyryl)benzène.

La longueur d'onde d'absorption de cette fibre ainsi dopée est de 350 nm, dans l'ultraviolet proche, et sa longueur d'onde de réémission est de 420 nm dans le bleu.

Selon un second type de fibres, cette base sera mélangée à 10 mg/l avec de la coumarine-six dont la formule est :

3-(2'Benzothiazolyl)-7-N,N-diéthylaminocoumarin

La longueur d'onde d'absorption de cette fibre ainsi dopée est de 460 nm dans le bleu-vert et sa longueur d'onde de réémission est de 540 nm dans le vert-jaune.

Selon un troisième type de fibres, cette base sera mélangée à 10 mg/l avec de la Rhodamine 6G dont la formule est :

Ethyl    0-    [    6-(éthylamino)-3-(éthylimino)-2,7 diméthyl-3H-xanthen-9-yl ] benzoate chloride

La longueur d'onde d'absorption de cette fibre ainsi dopée est de 530 nm dans le vert, et sa longueur d'onde de réémission est de 585 nm dans le rouge.

L'invention n'est évidemment pas limitée aux applications données ci-dessus uniquement à titre d'exemples.

**Revendications**

1. Procédé d'exploitation d'au moins un rayonnement lumineux dans au moins un espace utile traversé par ce rayonnement au moyen d'au moins une fibre optique fluorescente à coeur et gaine transparents, caractérisé en ce que l'on dispose en un endroit quelconque de cet espace utile (12) une partie d'une telle fibre fluorescente (14) dans une position telle qu'elle soit susceptible d'être excitée latéralement par ce rayonnement (11) et que l'on munit au moins l'une (20) des deux extrémités de la fibre, où apparaît un signal lumineux correspondant à une excitation latérale de la fibre, de moyens fonctionnels (21) d'exploitation de ce signal, (figure 3).

2. Procédé selon la revendication 1, caractérisé en ce que la partie de fibre excitable latéralement est susceptible d'être soumise au flux d'une seule source ponctuelle (11.1) et que l'extrémité (20.1) de fibre assure une fonction binaire de signalisation de l'état de fonctionnement ou de non fonctionnement de cette source, (figure 4).

3. Procédé selon la revendication 1, caractérisé en ce que la partie de fibre excitable latéralement est susceptible d'être soumise en flux d'une pluralité de sources ponctuelles (11 et 11a) et que l'extrémité de fibre (20) assure une fonction logique optique OU, de signalisation de l'état de non fonctionnement de ces sources ou de fonctionnement de l'une au moins d'entre elles (figure 3).

4. Procédé selon la revendication 1, caractérisé en ce que la partie de fibre excitable latéralement (14.7) est enroulée tout autour et à proximité d'une source lumineuse matérielle (11.7), cette partie de fibre assurant ainsi une fonction de collection du flux lumineux émis par cette source, et que les extrémités de fibre (20.7) assurent une fonction de concentration ponctuelle de lumière et d'émission ponctuelle de cette lumière concentrée, (figures 5 et 6).

5. Procédé selon la revendication 1, caractérisé en ce que l'on dispose en un endroit quelconque de l'espace utile traversé par un rayonnement lumineux un panneau (24) formé par l'accolement dans une surface cylindrique de plusieurs fibres optiques fluorescentes (14.8) dont les extrémités 25 et 26 sont situées côte à côte le long des bords extrêmes du panneau, la face du panneau assurant ainsi une fonction de collection du flux lumineux et les bords extrêmes du panneau assurant ainsi une fonction de concentration en ligne de lumière et d'émission en ligne de cette lumière concentrée, (figure 8).

6. Procédé selon la revendication 5, caractérisé en ce que l'on collecte cette émission en ligne (25, 26) de lumière concentrée à l'aide d'une autre partie de fibre optique fluorescente (14.9) excitable latéralement par cette ligne d'émission de lumière concentrée, les extrémités de cette dernière fibre assurant ainsi une fonction de deuxième concentration du flux initial, (figure 9).

7. Procédé selon la revendication 6, pour l'exploitation d'un rayonnement lumineux parallèle, notamment le rayonnement solaire, caractérisé en ce que l'on dispose sur une surface touchée par ce rayonnement une pluralité de panneaux (24) du type précité, que l'on collecte l'énergie lumineuse concentrée aux bords de ces panneaux par un jeu de fibres optiques fluorescentes (14.10) et l'on excite par les extrémités des fibres de ce jeu une troisième fibre optique fluorescente (14.10.1) assurant ainsi une fonction de troisième concentration du rayonnement initial et que l'on associe les extrémités de cette troisième fibre à des moyens de conversion directe de lumière en électricité (32), (figure 10).

8. Procédé selon la revendication 1, caractérisé en ce que l'on dispose une source de lumière linéaire (29) et en regard de cette source et parallèlement à elle, une fibre optique fluorescente (14.11), et l'on équipe les extrémités de cette fibre de détecteurs de lumière (28), des moyens de traitement de l'information connus en soi étant prévus pour traiter les informations délivrées par ces détecteurs et fournir ainsi des indications sur les variations de lumière excitant latéralement la fibre, ces variations étant provoquées soit par des défauts résultant de manques de matière dans une bande de matériau à contrôler défilant entre la source linéaire et la fibre, soit par l'apparition d'objets opaques dans l'espace normalement libre entre la source linéaire et la fibre, (figure 11).

9. Procédé selon la revendication 1, pour l'exploitation d'un rayonnement lumineux polychromatique, caractérisé en ce que l'on soumet au rayonnement de cette source une pluralité de fibres optiques fluorescentes dont chacune absorbe en raison de son dopage particulier une longueur d'onde correspondante bien définie, de sorte que l'excitation ou la non excitation de chacune de ces fibres permet d'assurer une fonction d'analyse spectrale du rayonnement.

10. Dispositif élémentaire pour la mise en oeuvre du procédé selon l'une des revendications 1 à 3, caractérisé en ce qu'il comprend une fibre optique fluorescente (14), des moyens de support (13) d'une partie de cette fibre destinés à placer cette partie dans un espace utile (12) traversé par au moins un rayonnement lumineux à exploiter (11), et des moyens (21) associés à au moins une extrémité (20) de la fibre pour assurer une fonction d'exploitation de ce rayonnement, (figure 3).

11. Dispositif élémentaire pour la mise en oeuvre du procédé selon la revendication 4, caractérisé en ce qu'il comprend un enroulement d'une fibre optique fluorescente (14.7) destiné à former une surface cylindrique destinée à entourer la source de rayonnement lumineux (11.7) (figures 5 et 6).

12. Dispositif élémentaire pour la mise en oeuvre du procédé selon la revendication 5, caractérisé en ce qu'il comprend plusieurs fibres optiques fluorescentes accolées latéralement les unes aux autres (14.8) pour former un panneau (24) destiné à être exposé au rayonnement lumineux et dont les bords extrêmes (25, 26) constituent des sorties en ligne de lumière concentrée (figure 8).

13. Dispositif élémentaire selon la revendication 12, pour la mise en oeuvre du procédé selon la revendication 9, caractérisé en ce qu'il est formé par l'association d'un tel panneau (24) avec une fibre optique fluorescente transversale (14.9) collectant les sorties en ligne de lumière concentrée du panneau, (figure 9).

14. Dispositifs caractérisés en ce qu'ils sont le montage en parallèle de dispositifs selon la revendication 10.

15. Dispositifs caractérisés en ce qu'ils sont le montage en série de dispositifs selon la revendication 13.

16. Appareil pour la mise en oeuvre du procédé selon la revendication 2, réalisant la signalisation de l'état de fonctionnement ou de non fonctionnement d'au moins une source de rayonnement (11.1, 11.2,...,11.6), caractérisé en ce que les moyens associés à l'extrémité de la fibre (20.1, 20.2,..., 20.6) sont des moyens de signalisation montés sur un tableau de bord (21), (figure 4).

17. Appareil de signalisation selon la revendication 16, caractérisé en ce que l'autre extrémité de la fibre est munie d'un revêtement jouant le rôle de miroir.

18. Source de lumière ponctuelle très lumineuse fonctionnant selon le procédé de la revendication 4, caractérisée en ce qu'elle est constituée des extrémités (20.7) d'une fibre (14.7) enroulée à spires jointives autour d'une source lumineuse (11.7), (figures 5 et 6).

19. Appareil transformant directement l'énergie solaire en électricité conformément au procédé selon la revendication 7, caractérisé en ce qu'il comporte en cascade des panneaux (24) de fibres optiques fluorescentes accolées et des fibres (14.10) de collection de l'énergie concentrée délivrée sur les bords de ces panneaux, les extrémités de sortie de la fibre finale (14.10.1) étant associées à des piles photovoltaïques (32), (figure 10).

20. Appareil de contrôle pour la mise en oeuvre du procédé selon la revendication 8, caractérisé en ce qu'il comporte une source lumineuse linéaire (29), une fibre optique fluorescente (14.11) disposée en regard et parallèlement à cette source, et des photodiodes (28) associées aux extrémités de cette fibre, des moyens de traitement de l'information connus en soi étant associés à ces photodiodes pour interpréter les variations de lumière reçue par la fibre, (figure 11).

21. Appareil d'analyse spectrale d'un rayonnement polychromatique pour la mise en oeuvre du procédé selon la revendication 9, caractérisé en ce qu'il comporte une pluralité de fibres optiques fluorescentes dopées de manières différentes et absorbant en conséquence des rayonnements de longueurs d'onde différentes, des moyens de traitement de l'information connus en soi étant associés aux signaux de sortie des différentes fibres pour effectuer cette analyse spectrale.

FIG.1

FIG.2

FIG.3

FIG.4

FIG.5

FIG.6

0 187 561

FIG.7

FIG.8

FIG.9

FIG.10

FIG.11

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| Y | GB-A-1 274 128  (INST. KIBERNETIKI) <br> * En entier * <br><br> --- | 1 | G 02 B    6/00 <br> G 02 B    1/00 |
| Y | EP-A-0 074 807  (THE SECRETARY OF STATE FOR DEFENCE) <br> *  Page  1; page 2, lignes 18-32; page    3,    lignes    1-9; revendications 1,31; figure 6 * | ·1 | |
| A | | 7,9,17 ,19 <br><br> --- | |
| A | US-A-3 569 933  (B.C. LONGENECKER) <br> * Colonne 2, lignes 20-55; figure 1 * | 2 | |
| A | FR-A-2 365 814  (JENAER GLASWERK) <br> * Figure 3A * <br><br> --- | 3,16 | DOMAINES TECHNIQUES RECHERCHES (Int. Cl.4) <br><br> G 02 B    6 <br> G 02 F    1/133 |
| A | US-A-3 567 985  (D.M. GOODMAN) <br><br> *  Colonne  4, lignes 39-54; fig- ures 7,8 * <br><br> --- | 4,11, 18 | |
| A | US-A-3 934 148  (W.O. COLLINS) <br> *  Colonne  2, lignes 28-62; fig- ures 1,2 * <br><br> ---            -/- | 5,12 | |

Le present rapport de recherche a été établi pour toutes les revendications

| Lieu de la recherche | Date d'achèvement de la recherche | Examinateur |
|---|---|---|
| LA HAYE | 21-03-1986 | PFAHLER R. |

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| A | US-A-3 274 392 (D.W. HARLING)<br>* Revendication 1; figure 2 * | 7,19 | |
| A | US-A-3 317 738 (W. PIEPENBRINK)<br>* En entier * | 8,20 | |
| A | EP-A-0 022 198 (SIEMENS)<br><br>* Revendications 1,5-9 * | 10,14,15 | |

DOMAINES TECHNIQUES RECHERCHES (Int. Cl.4)

Le présent rapport de recherche a été établi pour toutes les revendications

| Lieu de la recherche | Date d'achèvement de la recherche | Examinateur |
|---|---|---|
| LA HAYE | 21-03-1986 | PFAHLER R. |